# EUROPEAN PATENT APPLICATION

(11) **EP 4 650 613 A1**
(43) Date of publication of application: **19.11.2025**
(21) Application number: 24175395.3
(22) Date of filing: 13.05.2024
(51) Int. Cl.: F16C 17/02, F16C 17/04, F16C 17/10, F16C 23/04, F16C 25/04, F16C 27/06, F16C 27/08, F16C 35/02, F16C 43/02

(54) **PROPULSION UNIT**

(71) Applicant: ABB Oy, 00380 Helsinki (FI)
(72) Inventor: Pellinen, Petri, 00980 Helsinki (FI); Turunen, Ari, 00980 Helsinki (FI)
(74) Representative: Boco IP Oy Ab

(57) **Abstract**

Presented is a propulsion unit comprising a housing supported with a support arm on a hull, a propeller shaft (4). The propeller shaft has an axis of rotation and is rotatably supported with a first bearing (5) and with a second bearing. The first bearing comprising a thrust bearing (8) positioned and supported in a bearing house (9), and a radial bearing (10) that is a sliding bearing. The first bearing comprising a collar (11). Opposite side surfaces of the collar is rotatably supported in the bearing house on elastic biasing means (30) loaded slide pieces (12) of the thrust bearing. The radial bearing is positioned and supported in the bearing house, and the radial bearing is positioned axially at least partly between the elastic biasing means loaded slide pieces.

## Description

### Field of the invention

The invention relates to a propulsion unit as defined in the preamble of independent claim 1.

### Objective of the invention

The object of the invention is to provide a propulsion unit that has a simple construction of the bearing arrangement for the propeller shaft.

### Short description of the invention

The propulsion unit of the invention is characterized by the definitions of independent claim 1.

Preferred embodiments of the propulsion unit are defined in the dependent claims.

### List of figures

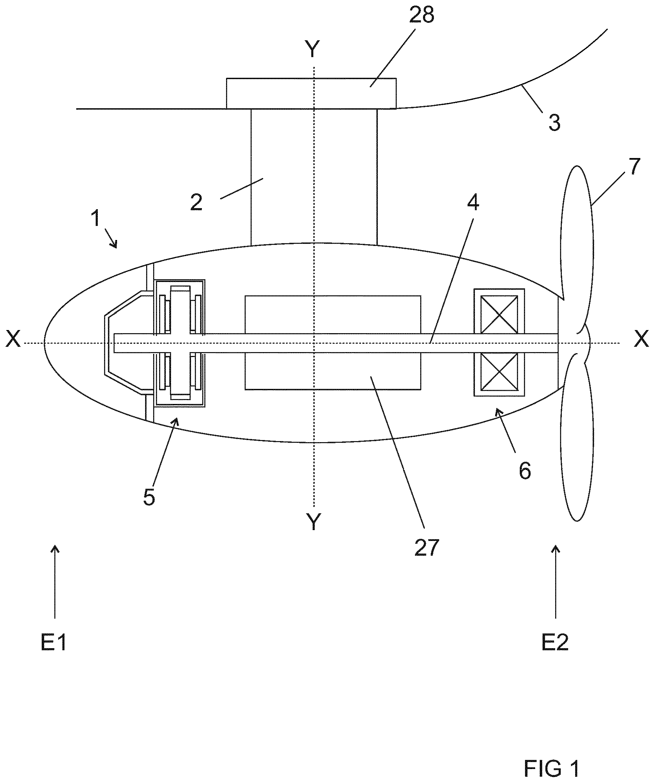

In the following the invention will described in more detail by referring to the figures, which
Figure 1 shows a cross-sectional view of a propulsion unit,
Figure 2 shows a cross-sectional view of a first version of the first bearing,
Figure 3 shows a cross-sectional view of a second version of the first bearing,
Figure 4 shows a cross-sectional view of a third version of the first bearing,
Figure 5 shows a cross-sectional view of a fourth version of the first bearing,
Figure 6 shows a cross-sectional view of a fifth version of the first bearing,
Figure 7 shows a cross-sectional view of the first version of the first bearing illustrated in figure 2 as cut along plane A-A in figure 2,
Figure 8 shows a cross-sectional view of the first version of the first bearing illustrated in figure 2 as cut along plane B-B in figure 2, and
Figure 9 shows a cross-sectional view of the first version of the first bearing illustrated in figure 2 as cut along plane C-C in figure 2.

### Detailed description of the invention

Next the propulsion unit and some embodiments and variants of the propulsion unit will be described in greater detail.

The propulsion unit comprises a housing 1 supported with a support arm 2 on a hull 3 of a marine vessel (not marked with a reference numeral).

The housing 1 has a first end E1 and a second opposite end E2 in a longitudinal direction of the housing 1.

The propulsion unit comprises a propeller shaft 4 extending in the longitudinal direction of the housing 1 within the housing 1.

The propeller shaft 4 has an axis of rotation X-X and is rotatably supported within the housing 1 with a first bearing 5 and with a second bearing 6.

A propeller 7 is attached to an end of the propeller shaft 4 outside the housing 1.

The first bearing 5 comprise a thrust bearing 8 positioned and supported in a bearing house 9.

The first bearing 5 comprises a radial bearing 10 that is a sliding bearing.

The first bearing 5 comprises a collar 11 rotating with the propeller shaft 4 and protruding radially outwards from the propeller shaft 4.

The opposite side surfaces of the collar 11 are rotatably supported in the bearing house 9 on elastic biasing means 30 loaded slide pieces 12 of the thrust bearing 8 so that the collar 11 is axially X-X positioned between said elastic biasing means 30 loaded slide pieces 12 of the thrust bearing 8. The elastic biasing means 30 loaded slide pieces 12 of the thrust bearing 8 are preferably, but not necessarily, configured to resiliently yield axially X-X, i.e. in the direction of the propeller shaft 4. The elastic biasing means 30 loaded slide pieces 12 of the thrust bearing 8 are preferably, but not necessarily, configured to at least partly resiliently resist tilting such as to resiliently resist excess tilting of the collar 11 in the bearing house 9 with respect to the bearing house 9.

The elastic biasing means 30 can for example comprise at least one of a spring, an elastically deformable part, a part having an elastically deformable structure, and a part made at least partly of elastically deformable material.

The radial bearing 10 is positioned and supported in the bearing house 9.

The radial bearing 10 is positioned axially X-X at least partly between the elastic biasing means 30 loaded slide pieces 12 of the thrust bearing 8 so that a circumferential surface 13 of the collar 11 is rotatably supported on an annular sliding surface 14 of the radial bearing 10 in the bearing house 9.

Because the collar 11 has a large diameter and thus a large circumferential surface, supporting of the circumferential collar 13 of the collar on the annular sliding surface 14 of the radial bearing 10 provides for a large support area in the radial bearing 10.

Because the collar 11 can have a short length, the radial beating 10 will be less sensitive to bending of propeller shaft 4.

Providing of the radial bearing axially X-X between the elastic biasing means 30 loaded slide pieces 12 of the thrust bearing 8 so that a circumferential surface 13 of the collar 11 is rotatably supported on an annular sliding surface 14 of the radial bearing 10 in the bearing house 9 saves space in the housing 1 of the propulsion unit and provides for a simple construction of the bearing arrangement for the propeller shaft 4 of the propulsion unit.

An electric motor 27 is preferably, but not necessarily, provided in the housing 1 for rotation of the propeller shaft 4. Alternatively can a mechanical arrangement (not illustrated) be provided between an electric motor or an internal combustion engine provided at the marine vessel for rotation of the propeller shaft 4.

The propulsion unit is preferably, but not necessarily, provided with a turning arrangement 28 for turning the propulsion unit with respect to the hull 3 of the marine vessel about a turning axis Y-Y so as to steer the marine vessel by means of the propulsion unit. The propulsion unit can be attached to the hull of the marine vessel by means of the turning arrangement.

The radial bearing 10 is preferably, but not necessarily, positioned axially X-X fully between the elastic biasing means 30 loaded slide pieces 12 of the thrust bearing 8.

The radial bearing 10 is preferably, but not necessarily, positioned radially outside the elastic biasing means 30 loaded slide pieces 12 of the thrust bearing 8.

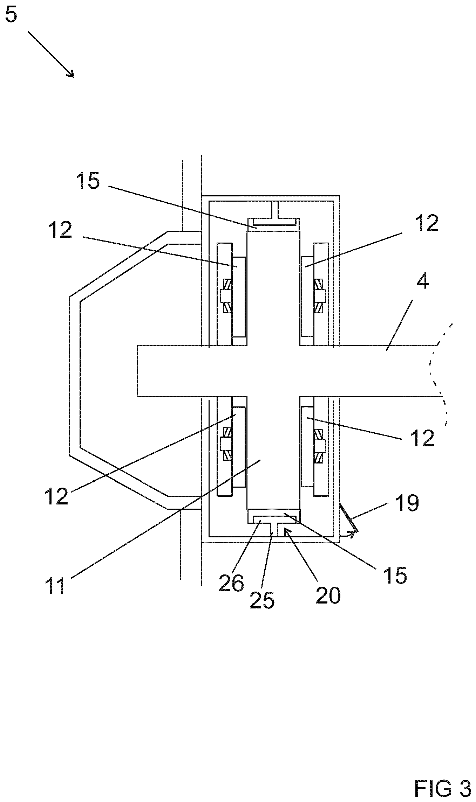

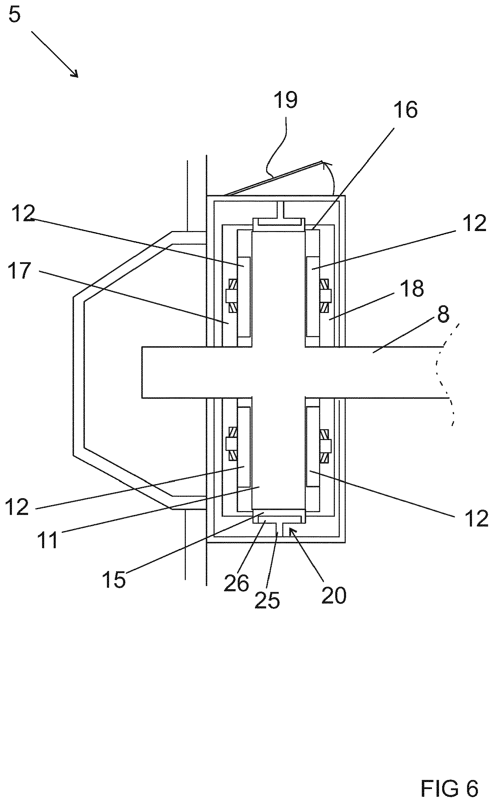

The radial bearing 10 is preferably, but not necessarily, as in the second version of the first bearing 5 illustrated in figure 3 and as in the fifth version of the first bearing 5 illustrated in figure 6, provided at a flexible supporting structure 20 in the bearing house 9.

The flexible supporting structure 20 can for example be formed by a structure that is supported by the bearing house 9 and that has reduced material thickness or a corresponding weakening that allows the flexible supporting structure 20 to flex in response to the radial bearing 10 being loaded by the collar 11.

In the versions of the first bearing 5 illustrated in figures 3 and 6, the flexible supporting structure 20 comprises a ring 25 that is attached to circumferential inner surface of bearing house 9 and an annular flange 26 that attached to the ring 25.

In the versions of the first bearing 5 illustrated in figures 3 and 6, the radial bearing 10 is supported by the annular flange 26. In the versions of the first bearing 5 illustrated in figures 3 and 6, the ring 25 together with the annular flange 26 forms the flexible supporting structure 20 that is capable of flexing in response to the radial bearing 10 being loaded by the collar 11. This means for example that the angle between the ring 25 and the annular flange 26 can change in response to tilting of the collar 11 inside the bearing house 9.

The radial bearing 10 is preferably, but not necessarily, at least partly made of elastically compressible material so that the material of the radial bearing 10 can elastically be compressed in response to the radial bearing 10 being loaded by the collar 11 such as in response to tilting of the collar 11 inside the bearing house 9.

The radial bearing 10 comprises preferably, but not necessarily, a plurality of radial sliding pads 15 forming the annular sliding surface 14 of the radial bearing 10.

If the radial bearing 10 comprises a plurality of radial sliding pads 15 forming the annular sliding surface 14 of the radial bearing 10, at least one of said plurality of radial sliding pads 15 of the radial bearing 10 is preferably, but not necessarily, releasable positioned in the bearing house 9.

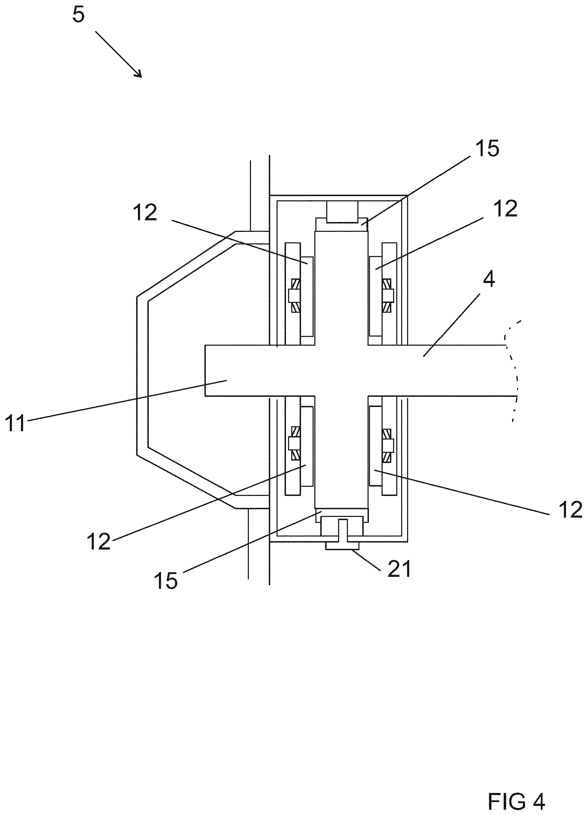

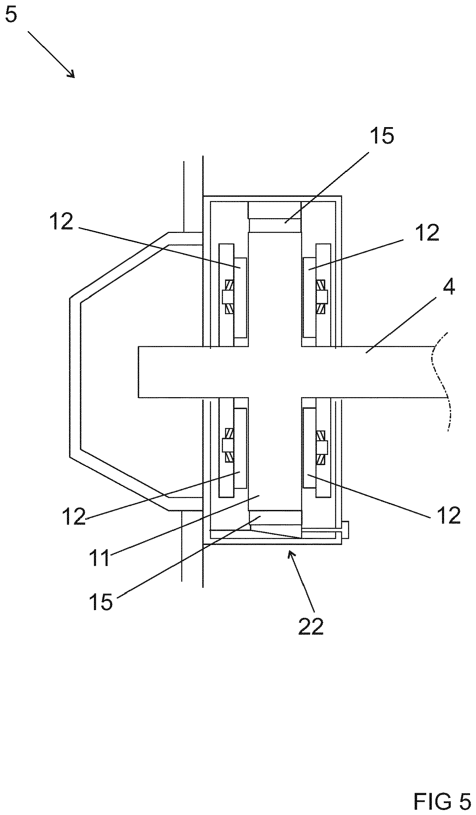

If the radial bearing 10 comprises a plurality of radial sliding pads 15 forming the annular sliding surface 14 of the radial bearing 10, the radial position of at least one of said plurality of radial sliding pads 15 of the radial bearing 10 is preferably, but not necessarily, adjustable with respect to the axis of rotation X-X. A need to adjust the radial position of at least one of said plurality of radial sliding pads 15 of the radial bearing 10 can for example be a result of wearing of said at least one radial sliding pad 15. The radial position of at least one of said plurality of radial sliding pads 15 the radial bearing 10 can, as in the third version of the first bearing 5 illustrated in figure 4, be adjustable with respect to the axis of rotation X-X by means of a screw arrangement 21. The radial position of at least one of said plurality of radial sliding pads 15 the radial bearing 10 can, as in the third version of the first bearing 5 illustrated in figure 5, be adjustable with respect to the axis of rotation X-X by means of a wedge arrangement 22. A need to adjust the radial position of at least one of said plurality of radial sliding pads 15 of the radial bearing 10 can for example be a result of wearing of said at least one radial sliding pad 15. The propulsion unit can be provided with a wear sensor (not illustrated in the figures) configured to monitor the condition of at least one of the radial sliding pads 15.

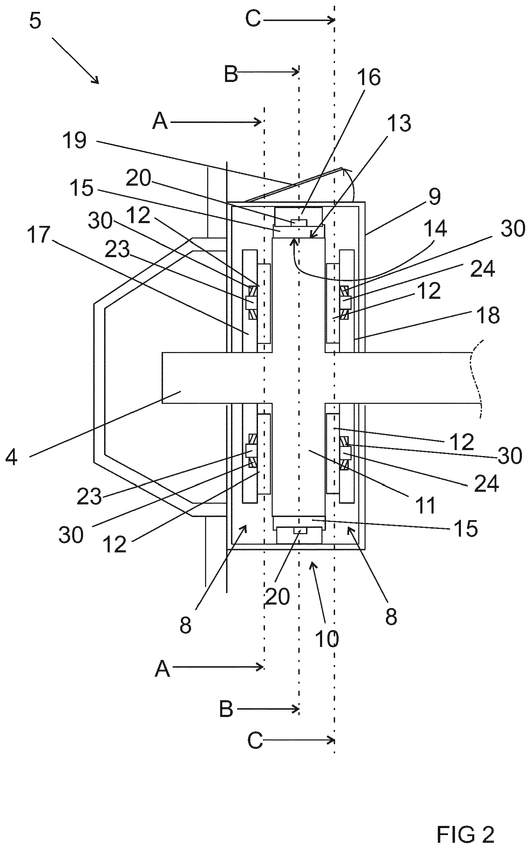

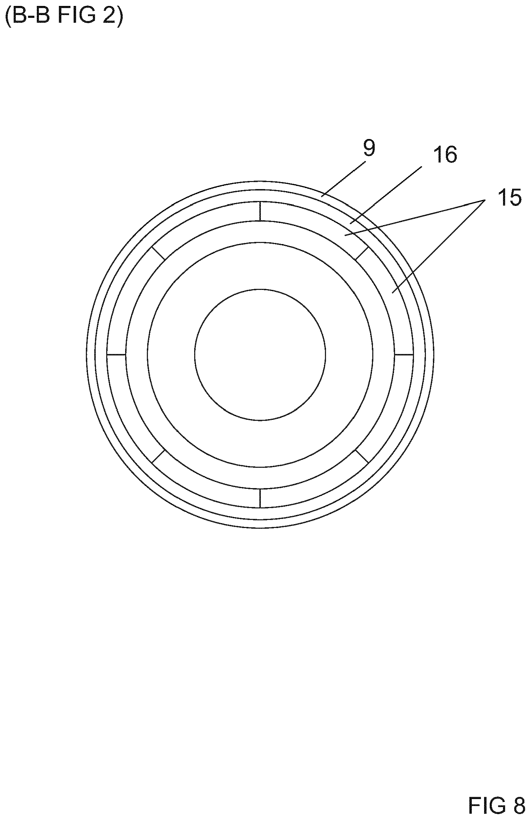

If the radial bearing 10 comprises a plurality of radial sliding pads 15 forming the annular sliding surface 14 of the radial bearing 10, the radial sliding parts 15 of the radial bearing 10 are preferably, but not necessarily, as illustrated in figures 2 and 8, releasable supported at first seats 29 of a first support part 16 that can be rotated about the axis of rotation X-X and the bearing house 9 is preferably, but not necessarily, provided with an openable and closable hatch 19, wherein the first support part 16 being rotatable about the axis of rotation X-X into such position with respect to the openable and closable hatch 19 so as to enable removing of a radial sliding pad 15 from a first seat 29 of the first support part 16 and subsequent removing of said sliding pad 15 from the bearing house 9 and so as to enable inserting of a sliding pad 15 into the bearing house 9 and subsequent inserting said sliding pad 15 into a first seat 29 of the first support part 16.

The openable and closable hatch 19 provides for access from the inside of the housing 1 to the parts of the radial bearing 10 such as to the sliding pads 15 of the radial bearing 10. This means that the parts of the radial bearing 10 such as to the sliding pads 15 of the radial bearing 10 can be inspected and/or replaced without drydocking of the marine vessel.

The elastic biasing means 30 loaded slide pieces 12 of the thrust bearing 8 are preferably, but not necessarily, releasable positioned in the bearing house 9.

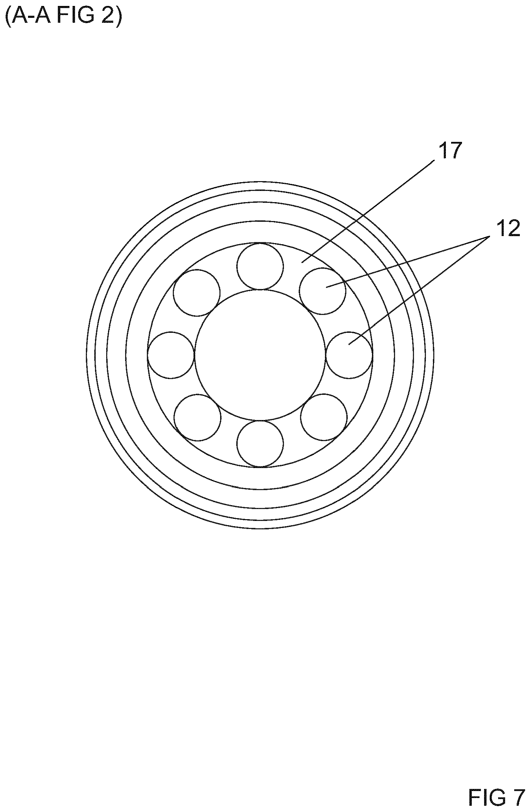

If the elastic biasing means 30 loaded slide pieces 12 of the thrust bearing 8 are releasable positioned in the bearing house 9, the elastic biasing means 30 loaded slide pieces 12 on one side of the collar 11 are preferably, but not necessarily, as illustrated in figures 2 and 7, releasable supported at second seats 23 of a second support part 17 that can be rotated about the axis of rotation X-X and the bearing house 9 is preferably, but not necessarily, provided with an openable and closable hatch 19, wherein the second support part 17 being rotatable about the axis of rotation X-X into such position with respect to the openable and closable hatch 19 so as to enable removing of a slide piece 12 from a second seat 23 of the second support part 17 and subsequent removing of said slide piece 12 from the bearing house 9 and so as to enable inserting of a slide piece 12 into the bearing house 9 and subsequent inserting said slide piece 12 into a second seat 23 of the second support part 17.

The openable and closable hatch 19 provides for access from the inside of the housing 1 to the parts of the thrust bearing 8 such as to elastic biasing means 30 loaded slide pieces 12 of the thrust bearing 8. This means that the parts of the thrust bearing 8 such as the elastic biasing means 30 loaded slide pieces 12 of the thrust bearing 8 can be inspected and/or replaced without drydocking of the marine vessel.

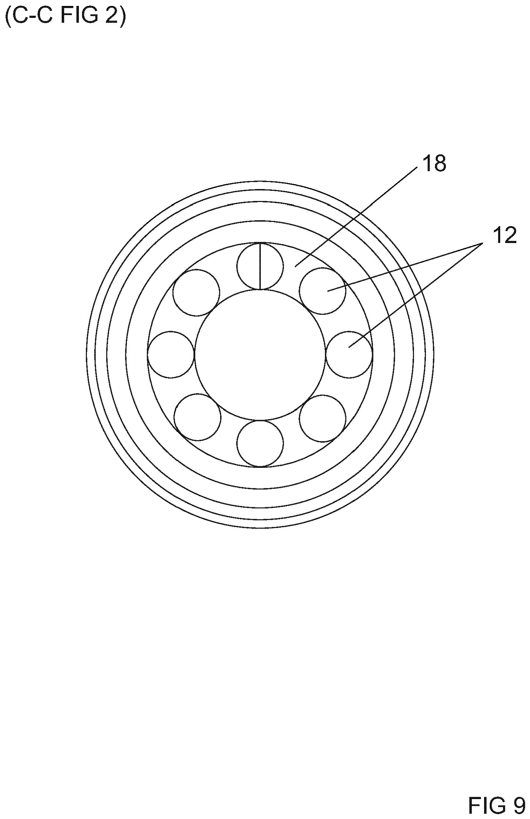

If the elastic biasing means 30 loaded slide pieces 12 of the thrust bearing 8 are releasable positioned in the bearing house 9, the elastic biasing means 30 loaded slide pieces 12 on the opposite side of the collar 11 are preferably, but not necessarily, as illustrated in figures 2 and 9, releasable supported at third seats 24 of a third support part 18 that can be rotated about the axis of rotation X-X and the bearing house 9 is preferably, but not necessarily, provided with an openable and closable hatch 19, wherein the third support part 18 being rotatable about the axis of rotation X-X into such position with respect to the openable and closable hatch 19 so as to enable removing of a slide piece 12 from a third seat 24 of the third support part 18 and subsequent removing of said slide piece 12 from the bearing house 9 and so as to enable inserting of a slide piece 12 into the bearing house 9 and subsequent inserting said slide piece 12 into a third seat 24 of the third support part 18.

The openable and closable hatch 19 provides for access from the inside of the housing 1 to the parts of the thrust bearing 8 such as to elastic biasing means 30 loaded slide pieces 12 of the thrust bearing 8. This means that the parts of the thrust bearing 8 such as the elastic biasing means 30 loaded slide pieces 12 of the thrust bearing 8 can be inspected and/or replaced without drydocking of the marine vessel.

If the propulsion unit comprises a first support part 16, a second support part 17 and a third support part 18, as presented, the first support part 16, at least two of the second support part 17 and the third support part 18 are preferably, but not necessarily, being connected together for rotation about the axis of rotation X-X.

If the propulsion unit comprises a first support part 16, a second support part 17 and a third support part 18, as presented, the first support part 16, the second support part 17 and the third support part 18 are preferably, but not necessarily, being connected together for rotation about the axis of rotation X-X as in the fifth embodiment of the first bearing 5 illustrated in figure 6.

It is apparent to a person skilled in the art that as technology advanced, the basic idea of the invention can be implemented in various ways. The invention and its embodiments are therefore not restricted to the above examples, but they may vary within the scope of the claims.

## Claims

1. A propulsion unit comprising
a housing (1) supported with a support arm (2) on a hull (3) of a marine vessel, the housing (1) having a first end (E1) and a second opposite end (E2) in a longitudinal direction of the housing (1),
a propeller shaft (4) extending in the longitudinal direction of the housing (1) within the housing (1), the propeller shaft (4) having an axis of rotation (X-X) and being rotatably supported within the housing (1) with a first bearing (5) and with a second bearing (6), and
a propeller (7) attached to an end of the propeller shaft (4) outside the housing (1),
wherein the first bearing (5) comprising a thrust bearing (8) positioned and supported in a bearing house (9),
wherein the first bearing (5) comprising a radial bearing (10) that is a sliding bearing,
wherein the first bearing (5) comprising a collar (11) rotating with the propeller shaft (4) and protruding radially outwards from the propeller shaft (4), and
wherein the opposite side surfaces of the collar (11) being rotatably supported in the bearing house on elastic biasing means (30) loaded slide pieces (12) of the thrust bearing (8) so that the collar (11) is axially (X-X) positioned between said elastic biasing means (30) loaded slide pieces (12) of the thrust bearing (8),
**characterized**
**by** the radial bearing (10) being positioned and supported in the bearing house (9), and
by the radial bearing (10) being positioned axially (X-X) at least partly between the elastic biasing means (30) loaded slide pieces (12) of the thrust bearing (8) so that a circumferential surface (13) of the collar (11) being rotatably supported on an annular sliding surface (14) of the radial bearing (10) in the bearing house (9).

2. The propulsion unit according to claim 1, **characterized**
**by** the radial bearing (10) being positioned axially (X-X) fully between the elastic biasing means (30) loaded slide pieces (12) of the thrust bearing (8).

3. The propulsion unit according to claim 1 or 2, **characterized**
**by** the radial bearing being positioned radially outside the elastic biasing means (30) loaded slide pieces (12) of the thrust bearing (8).

4. The propulsion unit according to any of the claims 1 to 3, **characterized**
**by** the radial bearing (10) being supported at a flexible supporting structure (20) in the bearing house (9).

5. The propulsion unit according to any of the claims 1 to 4, **characterized**
**by** the radial bearing being at least partly made of elastically compressible material.

6. The propulsion unit according to any of the claims 1 to 5, **characterized**
**by** the radial bearing (10) comprising a plurality of radial sliding pads (15) forming the annular sliding surface (14) of the radial bearing (10).

7. The propulsion unit according to claim 6, **characterized**
**by** at least one of said plurality of radial sliding pads (15) of the radial bearing (10) being releasable positioned in the bearing house (9).

8. The propulsion unit according claim 6 or 7, **characterized**
**by** the radial position of at least one of said plurality of radial sliding pads (15) the radial bearing (10) being adjustable with respect to the axis of rotation (X-X).

9. The propulsion unit according to claim 8, **characterized**
**by** the radial position of at least one of said plurality of radial sliding pads (15) the radial bearing (10) being adjustable with respect to the axis of rotation (X-X) by means of a screw arrangement (21).

10. The propulsion unit according to claim 8 or 9, **characterized**
**by** the radial position of at least one of said plurality of radial sliding pads (15) the radial bearing (10) being adjustable with respect to the axis of rotation (X-X) by means of a wedge arrangement (22).

11. The propulsion unit according to any of the claims 6 to 10, **characterized**
**by** the radial sliding parts (15) of the radial bearing (10) being releasable supported at first seats (29) of a first support part (16) that can be rotated about the axis of rotation (X-X),
by the bearing house (9) is provided with an openable and closable hatch (19), and
by the first support part (16) being rotatable about the axis of rotation (X-X) into such position with respect to the openable and closable hatch (19) so as to enable removing of a radial sliding pad (15) from a first seat (29) of the first support part (16) and subsequent removing of said sliding pad (15) from the bearing house (9) and so as to enable inserting of a sliding pad (15) into the bearing house (9) and subsequent inserting said sliding pad (15) into a first seat (29) of the first support part (16).

12. The propulsion unit according to any of the claims 1 to 11, **characterized**
**by** the elastic biasing means (30) loaded slide pieces (12) of the thrust bearing (8) being releasable positioned in the bearing house (9).

13. The propulsion unit according to claim 12, **characterized**
**by** the elastic biasing means (30) loaded slide pieces (12) on one side of the collar (11) being releasable supported at second seats (23) of a second support part (17) that can be rotated about the axis of rotation (X-X),
by the bearing house (9) is provided with an openable and closable hatch (19), and
by the second support part (17) being rotatable about the axis of rotation (X-X) into such position with respect to the openable and closable hatch (19) so as to enable removing of a slide piece (12) from a second seat (23) of the second support part (17) and subsequent removing of said slide piece (12) from the bearing house (9) and so as to enable inserting of a slide piece (12) into the bearing house (9) and subsequent inserting said slide piece (12) into a second seat (23) of the second support part (17).

14. The propulsion unit according to claim 12 or 13, **characterized**
**by** the elastic biasing means (30) loaded slide pieces (12) on the opposite side of the collar (11) being releasable supported at third seats (24) of a third support part (18) that can be rotated about the axis of rotation (X-X),
by the bearing house (9) is provided with an openable and closable hatch (19), and
by the third support part (18) being rotatable about the axis of rotation (X-X) into such position with respect to the openable and closable hatch (19) so as to enable removing of a slide piece (12) from a third seat (24) of the third support part (18) and subsequent removing of said slide piece (12) from the bearing house (9) and so as to enable inserting of a slide piece (12) into the bearing house (9) and subsequent inserting said slide piece (12) into a third seat (24) of the third support part (18).

15. The propulsion unit according claim 11, 13 and 14, **characterized**
**by** at least two of the first support part (16), the second support part (17) and the third support part (18) being connected together for rotation about the axis of rotation X-X.
